# DEMANDE DE BREVET EUROPEEN

(11) **EP 2 796 947 A1**
(43) Date de publication de la demande: **29.10.2014**
(21) Numéro de dépôt: 13165188.7
(22) Date de dépôt: 24.04.2013
(51) Int. Cl.: G04G 17/06, H04M 1/02

(54) **Systeme de détection de la fermeture d'une boîte d'un objet portable**

(71) Demandeur: ETA SA Manufacture Horlogère Suisse, 2540 Grenchen (CH)
(72) Inventeur: Corrêa, David, 2503 Bienne (CH); Laconte, Jean, 2013 Colombier (CH); Veuthey, Jean-Bernard, 2074 Marin (CH); Marti, Felix, 4513 Langendorf (CH)
(74) Mandataire: Ravenel, Thierry Gérard Louis

(57) **Abrégé**

La présente invention concerne un objet portable (1) comportant une carrure (2) fermée par un fond (3), dans lequel un module électronique (10) est placé, le module électronique comportant une platine (4) sur laquelle un circuit imprimé (6) est fixé, le circuit imprimé portant au moins une zone de contact (8) reliée à au moins une entrée d'au moins un circuit intégré (7), le circuit intégré fournissant au moins un signal à un dispositif électronique de traitement du signal, ledit objet portable comprenant en outre un organe de détection (9) passant d'au moins une première position indiquant que le fond (3) est fixé à la carrure (2) à une seconde position indiquant que le fond n'est pas fixé à la carrure.

## Description

L'invention concerne un objet portable comportant un boitier fermé par un fond et dans lequel un ensemble électronique est placé, ledit ensemble électronique comportant une platine sur laquelle un circuit imprimé portant au moins une zone de contact reliée à au moins une entrée d'au moins un circuit intégré est fixée, ledit au moins un circuit intégré fournissant au moins une information temporelle à des moyens d'affichage, l'objet portable comprenant en outre un organe de détection apte à avoir au moins une première position indiquant que le fond est fixé à la carrure et une seconde position indiquant que le fond n'est pas fixé à la carrure.

### Arrière-plan de l'invention

Il est connu une structure de pièce d'horlogerie, notamment une montre, comportant au moins une carrure et un fond pour renfermer un module électronique ou électrique. Ce module est agencé pour fournir des informations de temps et pour les afficher par l'intermédiaire de moyens d'affichage comme des aiguilles ou afficheurs LCD. Ce module comporte lui-même une platine dont un compartiment est agencé pour la réception d'un accumulateur d'énergie électrique, notamment une pile. La platine peut être agencée pour que le compartiment dans lequel l'accumulateur d'énergie électrique est placé occupe la quasi-totalité de la surface de la platine. Par exemple, il est envisageable que le compartiment de la platine occupe toute la surface de cette dernière à l'exception d'une partie périphérique définissant ledit compartiment. Cela permet à l'objet portable de fonctionner à l'aide d'un accumulateur d'énergie électrique de plus grande taille et donc potentiellement plus puissant ou ayant une durée de vie plus importante.

Ce module comporte encore un circuit imprimé fixé à la platine et sur lequel des composants électroniques tel qu'au moins un circuit intégré comme un microcontrôleur ou une mémoire sont agencés. Ces circuits intégrés sont utilisés pour fournir des informations de temps comme l'heure ou la date qui seront affichées.

Or, lors d'un changement de pile, l'utilisateur doit au préalable configurer la montre pour entrer dans un mode veille. Ce mode veille se caractérise par les moyens d'affichages qui sont agencés pour que les aiguilles se positionnent à midi et pour que les afficheurs LCD s'éteignent. Ce mode comprend également une sauvegarde des différents paramètres tout en continuant, en interne, à compter le temps. Une capacité peut faire office de batterie durant un certain laps de temps. Cette configuration est peu connue et complexe car elle nécessite d'entrer dans des modes de configuration de la montre.

Par conséquent, l'utilisateur qui change la pile ne prend pas la peine d'entrer dans le mode veille. Le fait d'enlever la pile entraîne alors une coupure de l'alimentation en énergie électrique et donc un arrêt des fonctions de la montre. Les informations de temps sont donc perdues ce qui obligent l'utilisateur à régler la montre une fois la pile changée.

### Résumé de l'invention

L'invention a pour but de pallier les inconvénients de l'art antérieur en proposant de fournir un objet portable, notamment une montre dont le changement de la pile est simple car ne nécessitant aucune manipulation supplémentaire préalable et plus sûre.

A cet effet, l'invention concerne un objet portable comportant une carrure fermée par un fond, dans lequel un module électronique est placé, le module électronique comportant une platine sur laquelle un circuit imprimé est fixé, le circuit imprimé portant au moins une zone de contact reliée à au moins une entrée d'au moins un circuit intégré, le circuit intégré fournissant au moins un signal à un dispositif électronique de traitement du signal, ledit objet portable comprenant en outre un organe de détection passant d'au moins une première position indiquant que le fond est fixé à la carrure à une seconde position indiquant que le fond n'est pas fixé à la carrure, **caractérisé en ce que** l'organe de détection est agencé pour que le fond soit, dans l'une des première ou seconde positions de l'organe de détection, électriquement à la zone de contact, de sorte que le passage de la première position à la seconde position entraîne un changement d'un niveau logique à l'entrée du circuit intégré afin que le module électronique passe automatiquement dans un mode de fonctionnement de veille.

Dans un premier mode de réalisation avantageux, l'organe de détection comprend un ressort métallique ressort présentant une première extrémité et une seconde extrémité, ladite platine comprenant un orifice par lequel ledit ressort s'engage pour être fixé, par ladite première extrémité, au circuit imprimé de sorte à être électriquement relié à ladite au moins une zone de contact.

Dans un second mode de réalisation avantageux, ladite au moins une zone de contact comprend une piste électrique reliée à ladite au moins une entrée d'au moins un circuit intégré et une métallisation sur laquelle la seconde extrémité du ressort se fixe.

Dans un troisième mode de réalisation avantageux, l'organe de détection comprend un ressort hélicoïdal présentant une première extrémité fixée au circuit imprimé, une seconde extrémité et une tige placée dans l'espace formé par le diamètre intérieure du ressort, la tige disposant d'une première extrémité sur laquelle une tête plate est agencée et une seconde extrémité fixée à la seconde extrémité du ressort, la tige étant également agencée pour traverser la platine et le circuit imprimé de sorte que la tête de la tige puisse être connectée à la zone de contact.

Dans un quatrième mode de réalisation avantageux, ladite au moins une zone de contact comprend une piste électrique formant une boucle ouverte de sorte que la tête plate de la tige puisse fermer cette boucle.

Dans un cinquième mode de réalisation avantageux, le ressort est hélicoïdal.

Dans un autre mode de réalisation avantageux, dans le mode de fonctionnement de veille, au moins un paramètre est sauvegardé et le dispositif électronique de traitement du signal est éteint.

Dans un autre mode de réalisation avantageux, le dispositif électronique de traitement du signal comprend au moins un afficheur numérique.

Dans un autre mode de réalisation avantageux, le dispositif électronique de traitement du signal comprend en outre au moins une aiguille et en ce que le circuit intégré déplace ladite au moins une aiguille jusqu'à une position de repos en mode de fonctionnement veille.

Dans un autre mode de réalisation avantageux, l'objet portable est une montre.

### Description sommaire des dessins

D'autres caractéristiques et avantages de l'invention apparaîtront à la lecture de la description détaillée qui va suivre, en référence aux dessins annexés, où :
- Les figures 1 et 2 représentent schématiquement un premier mode de réalisation de l'invention;
- Les figures 3 et 4 représentent schématiquement un second mode de réalisation de l'invention;
- La figure 5 représente schématiquement un organe de détection selon le second mode de réalisation de l'invention;

### Description détaillée des modes de réalisation préférés

L'invention concerne le domaine de l'horlogerie, et en particulier le domaine des montres comportant au moins un circuit électronique ou électrique alimenté par un accumulateur tel qu'une pile ou similaire.

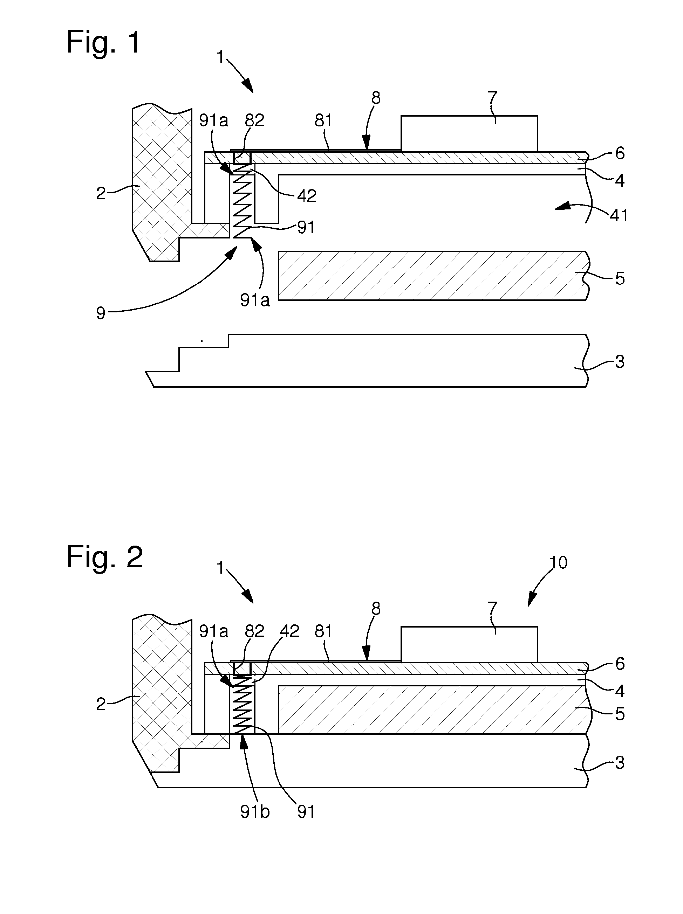

L'invention concerne une structure 1 de pièce d'horlogerie 100, notamment une montre, comportant au moins une carrure 2 et un fond 3 pour renfermer un ensemble ou module 10 électronique ou électrique visible à la figure 1. Cette carrure 2 fermée par un fond 3 permet de réaliser une boîte de montre. Cette carrure est également fermée par une glace. Ce module 10 est agencé pour fournir des signaux à un dispositif électronique de traitement du signal. Les signaux peuvent être des informations de temps transmises à des moyens d'affichage tels que des aiguilles ou afficheurs numériques LCD. Ce module 10 comporte lui-même une platine 4 dont un compartiment 41 est agencé pour la réception d'un accumulateur d'énergie électrique 5, notamment une pile. La platine 4 peut être agencée pour que le compartiment 41 dans lequel l'accumulateur d'énergie électrique est placé occupe la quasi-totalité de la surface de la platine 4. Par exemple, il est envisageable que le compartiment 41 de la platine 4 occupe toute la surface de cette dernière à l'exception d'une partie périphérique définissant ledit compartiment 41. Cela permet à l'objet portable de fonctionner à l'aide d'un accumulateur d'énergie électrique de plus grande taille et donc potentiellement plus puissant ou ayant une durée de vie plus importante.

Ce module 10 comporte encore un circuit imprimé 6 fixé à la platine 4 et sur lequel au moins un circuit intégré 7 et au moins une zone de contact 8 électrique sont agencés. Par exemple, le circuit intégré 7 est un microcontrôleur ou une mémoire. Le module électronique 10 peut bien entendu comprendre un microcontrôleur et une mémoire.

Selon l'invention, le module 10 comprend en outre un organe de détection 9 de fermeture du fond 3. De préférence, cet organe de détection 9 est un organe de détection élastique. cet organe de détection est agencé pour passer d'au moins une première position indiquant que le fond 3 est fixé à la carrure 2 à une seconde position indiquant que le fond 3 n'est pas fixé à la carrure 2.

Dans un premier mode de réalisation visible aux figures 1 et 2, l'organe de détection 9 est apte à détecter la présence d'un fond réalisé en métal. Dans ce cas, l'organe de détection 9 comprend un ressort métallique 91 fixé à la platine 4 faisant office de pièce de contact. Ce ressort 91 comprend une première extrémité 91a et une seconde extrémité 91b. Pour cela, la platine 4 est munie, dans la zone périphérique, d'un trou traversant 42. Dans ce trou traversant 42, l'organe de détection est placé. Ce ressort 91 est fixé par sa première extrémité 91b au circuit imprimé 6, en général sur la face du circuit imprimé 6 en contact avec la platine 4. Ce circuit imprimé 6 est agencé pour que l'extrémité du ressort formant l'organe de détection soit relié à la zone de contact 8. Par exemple, une zone de contact 8 peut être formée par une piste électrique 81 sur le circuit imprimé 6 ainsi qu'une métallisation 82 permettant au ressort 91 fixé sur la face du circuit imprimé 6 en contact avec la platine 4 d'être électriquement connecté avec la piste électrique 81.

Tant que le fond 3 n'est pas fixé à la carrure 2 comme visible à la figure 1, la seconde extrémité 91b du ressort 91 est libre c'est-à-dire qu'elle n'est pas en contact avec aucun élément.

Lorsque le fond 3 est fixé à la carrure 2 comme visible à la figure 2, la seconde extrémité 91b du ressort 91 entre en contact avec ledit fond 3 et le ressort 91 à tendance à se contracter. Par conséquent, le fond 3 devient connecté électriquement avec la zone de contact 8 via le ressort métallique 91. Un flanc montant et un niveau logique haut sont détectés par le circuit intégré 7 lui signifiant que le fond 3 est fixé.

Lorsque le fond 3 est désolidarisé de la carrure 2, la contrainte exercée sur le ressort n'est plus là et la seconde extrémité 91b du ressort 91 n'est plus en contact avec ledit fond 3. Par conséquent, le circuit intégré 7 détecte un flanc descendant et un niveau logique bas signifiant que le fond 3 est enlevé.

Cette détection du flanc descendant et du niveau logique bas signifiant que le fond 3 est enlevé est interprétée par le circuit intégré 7 comme étant une étape préliminaire à un changement de pile 5. Ce changement de pile implique que le module 10 électronique ne sera plus alimenté en énergie électrique durant un laps de temps. Le module électronique10 va alors passer automatiquement dans un mode veille ou « SLEEP ». Ce mode veille se caractérise par le dispositif électronique de traitement du signal qui se met en veille. Les moyens d'affichages qui sont agencés pour que les aiguilles se positionnent à midi et que le ou les afficheurs LCD s'éteignent. Ce mode comprend également une sauvegarde des différents paramètres qui peuvent être des paramètres de réglages ou temporels tout en continuant en interne à compter le temps. Une capacité peut faire office de batterie durant un certain laps de temps.

Cette caractéristique permet avantageusement une automatisation du passage en mode veille qui est totalement automatique et transparent pour l'utilisateur qui n'a donc pas besoin de s'en occuper.

Lorsque le fond 3 est de nouveau fixé à la carrure 2, le fond 3 se connecte électriquement avec la zone de contact 8 via le ressort métallique 91. Un flanc montant et un niveau logique haut sont détectés par le circuit intégré 7 lui signifiant que le fond 3 est fixé. Le circuit intégré 7 passe alors du mode veille au mode normal dans lequel l'heure, le temps est affiché via les aiguilles et/ou les afficheurs LCD.

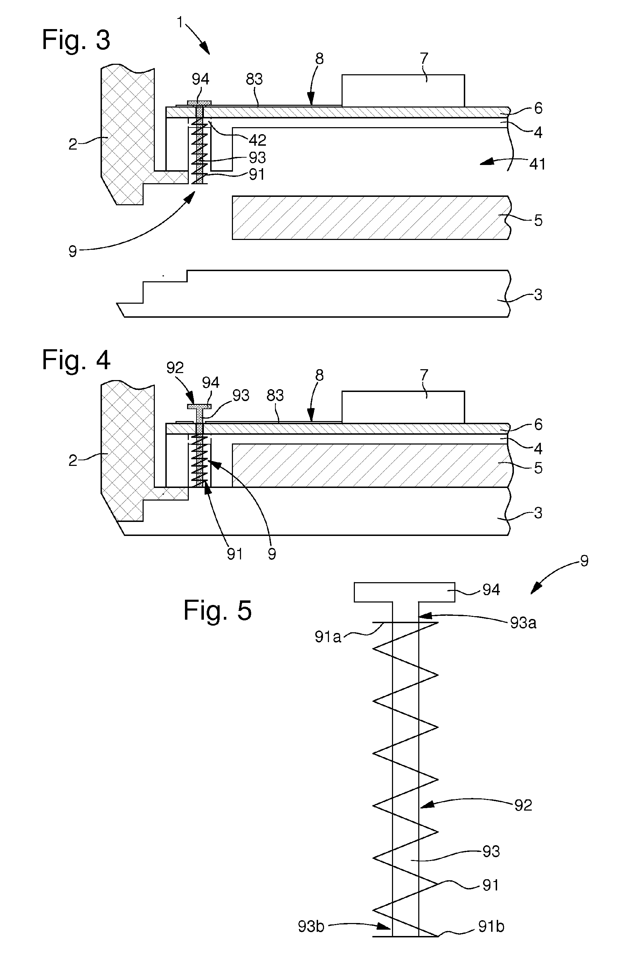

Dans un second mode de réalisation aux figures 3 et 4, l'organe de détection 9 est apte à détecter la présence d'un fond réalisé dans n'importe quel matériau notamment en plastique. Dans ce cas, l'organe de détection 9 comprend un ressort 91 pouvant être métallique ou non fixé à la platine 4. Ce ressort 91 comprend une première extrémité 91a et une seconde extrémité 91b. Pour cela, la platine 4 est munie, dans la zone périphérique, d'un trou traversant 42. Dans ce trou traversant 42, l'organe de détection 9 est placé. Cet organe de détection 9 est fixé par sa première extrémité 91b au circuit imprimé 6, en général sur la face du circuit imprimé 6 en contact avec la platine 4. Ce ressort fait office de pièce de rappel.

En effet, l'organe de détection 9 visible à la figure 5 comprend en outre un élément de contact 92. Cet élément comprend une tige 93 disposant de deux extrémités de tige 93a, 93b. A une première extrémité de tige 93a, une tête 94 plate est agencée de sorte que la seconde extrémité de tige 93b de la tige 93 soit libre. Cette tige 93 est placée dans l'espace formé par le diamètre intérieure du ressort 91 hélicoïdal. L'extrémité libre de la tige 93 est fixée à la seconde extrémité 91b du ressort 91. La tige 93 est également agencée pour être placée dans le trou traversant 42 de sorte que la tête 94 de la tige 93 soit reliée à la zone de contact 8. Pour cela, le circuit imprimé 6 comprend également un trou par lequel la tige 93 passe. Cette zone de contact 8 est alors formée par une piste électrique 83 sur le circuit imprimé 6 qui est coupée en deux par le trou. Par exemple, cette piste électrique 83 forme une boucle que la tête 94 de la tige 93 peut fermer ou ouvrir.

Lorsque le fond 3 est fixé à la carrure 2 comme visible à la figure 4, la seconde extrémité 91b du ressort 91 entre en contact avec ledit fond 3 et le ressort 91 est alors contracté. Par conséquent, la tige 93 fixée au ressort 91 suit cette contraction du ressort 91. Ainsi, la tête plate de la tige 93 n'est pas en contact avec la zone de contact 8. La piste électrique 83 formant une boucle est donc ouverte. Un flanc descendant et un niveau logique bas ou « 0 » sont alors détectés. Dans le cas de ce second mode de réalisation, un tel niveau logique est interprété comme signifiant que le fond 3 est fixé.

Lorsque le fond 3 est enlevé de la carrure 2 comme visible à la figure 3, la seconde extrémité 91b du ressort 91 devient libre c'est-à-dire qu'elle n'est en contact avec aucun élément. Par conséquent le ressort 91 ne subit plus de contrainte et se détend. De ce fait, la tête 94 plate de la tige 93 entre en contact avec la zone de contact 8. La piste électrique 83 formant une boucle se ferme alors. Un flanc montant et un niveau logique haut ou « 1 » sont donc détectés. Dans le cas de ce second mode de réalisation, un tel niveau logique est interprété comme signifiant que le fond 3 n'est plus fixé.

Cette détection du niveau logique haut signifiant que le fond 3 est enlevé est interprétée par le circuit intégré 7 comme étant une étape préliminaire à un changement de pile 5. Ce changement de pile 5 implique que le module 10 électronique ne sera plus alimenté en énergie électrique durant un laps de temps. Le circuit intégré 7 va alors passer automatiquement dans un mode veille ou « SLEEP ».

On comprendra que lorsque le fond 3 est de nouveau fixé à la carrure, la tête plate de la tige se déplace de sorte que la boucle formée par la piste électrique s'ouvre. Le circuit intégré 7 interprète un changement de mode de fonctionnement et repasse alors en mode normal.

Le ressort 91 peut être fixé au circuit imprimé 6 en utilisant de la colle ou une soudure ou un brasage ou toutes autres méthodes possibles.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Objet portable (1) comportant une carrure (2) fermée par un fond (3), dans lequel un module électronique (10) est placé, le module électronique comportant une platine (4) sur laquelle un circuit imprimé (6) est fixé, le circuit imprimé portant au moins une zone de contact (8) reliée à au moins une entrée d'au moins un circuit intégré (7), le circuit intégré fournissant au moins un signal à un dispositif électronique de traitement du signal, ledit objet portable comprenant en outre un organe de détection (9) passant d'au moins une première position indiquant que le fond (3) est fixé à la carrure (2) à une seconde position indiquant que le fond n'est pas fixé à la carrure, **caractérisé en ce que** l'organe de détection (9) est agencé pour que le fond soit, dans l'une des première ou seconde positions de l'organe de détection (9), électriquement à la zone de contact (8), de sorte que le passage de la première position à la seconde position entraîne un changement d'un niveau logique à l'entrée du circuit intégré afin que le module électronique passe automatiquement dans un mode de fonctionnement de veille.

2. Object portable selon la revendication 1, **caractérisé en ce que** l'organe de détection (9) comprend un ressort métallique ressort (91) présentant une première extrémité (91a) et une seconde extrémité (91b), ladite platine comprenant un orifice (42) par lequel ledit ressort (91) s'engage pour être fixé, par ladite première extrémité, au circuit imprimé (6) de sorte à être électriquement relié à ladite au moins une zone de contact (8).

3. Object portable selon la revendication 2, **caractérisé en ce que** ladite au moins une zone de contact (8) comprend une piste électrique (81) reliée à ladite au moins une entrée d'au moins un circuit intégré et une métallisation (82) sur laquelle la seconde extrémité (91b) du ressort (91) se fixe.

4. Object portable selon la revendication 1, **caractérisé en ce que** l'organe de détection (9) comprend un ressort hélicoïdal (91) présentant une première extrémité (91a) fixée au circuit imprimé (6), une seconde extrémité (91b) et une tige (93) placée dans l'espace formé par le diamètre intérieure du ressort (91), la tige disposant d'une première extrémité de tige sur laquelle une tête (94) plate est agencée et une seconde extrémité de tige (93b) fixée à la seconde extrémité (91b) du ressort (91), la tige (93) étant également agencée pour traverser la platine et le circuit imprimé de sorte que la tête de la tige puisse être connectée à la zone de contact (8).

5. Object portable selon la revendication 4, **caractérisé en ce que** ladite au moins une zone de contact (8) comprend une piste électrique (83) formant une boucle ouverte de sorte que la tête plate de la tige puisse fermer cette boucle.

6. Object portable selon les revendications 2 ou 4, **caractérisé en ce que** le ressort est hélicoïdal.

7. Object portable selon la revendication 1, **caractérisé en ce que**, dans le mode de fonctionnement de veille, au moins un paramètre est sauvegardé et le dispositif électronique de traitement du signal est éteint.

8. Object portable selon la revendication 7, **caractérisé en ce que** le dispositif électronique de traitement du signal comprend au moins un afficheur numérique.

9. Object portable selon les revendication 7 ou 8, **caractérisé en ce que** le dispositif électronique de traitement du signal comprend en outre au moins une aiguille et **en ce que** le circuit intégré déplace ladite au moins une aiguille jusqu'à une position de repos en mode de fonctionnement veille.

10. Object portable selon l'une des revendication précédentes, **caractérisé en ce qu'il** est une montre.
